Europäisches Patentamt

European Patent Office

Office européen des brevets

(11) Veröffentlichungsnummer: **0 413 236 A1**

# (12) EUROPÄISCHE PATENTANMELDUNG

(21) Anmeldenummer: **90115137.3**

(22) Anmeldetag: **07.08.90**

(51) Int. Cl.⁵: **F02B 77/11, B60R 13/08**

(30) Priorität: **18.08.89 DE 8909916 U**

(43) Veröffentlichungstag der Anmeldung:
**20.02.91 Patentblatt 91/08**

(84) Benannte Vertragsstaaten:
**BE DE ES FR GB IT NL**

(71) Anmelder: **Plate, Rudolf**
**Hantalgasse 32**
**D-6520 Worms(DE)**

(72) Erfinder: **Plate, Rudolf**
**Hantalgasse 32**
**D-6520 Worms(DE)**

(74) Vertreter: **Leineweber, Jürgen, Dipl.-Phys.**
**Nagelschmiedshütte 8**
**D-5000 Köln 40(DE)**

(54) **Hitzeschild.**

(57) Die Erfindung betrifft ein Hitzeschild (1) zum Schutz eines Fahrzeugs bzw. Fahrzeugteilbereichs gegen die von heißen Bauteilen, wie Auspufftopf, Katalysator, Motorblock o.dgl. ausgehende Wärmebelastung; um ein stabiles und besonders wirksames Hitzeschild zu schaffen, wird vorgeschlagen, daß es aus einer Silizium enthaltenden Wärmeschutzmasse, vorzugsweise Keramik, besteht.

Fig.1

EP 0 413 236 A1

# HITZESCHILD

Die Erfindung bezieht sich auf ein Hitzeschild zum Schutz eines Fahrzeugs bzw. Fahrzeugteilbereichs gegen die von heißen Bauteilen, wie Auspufftopf, Katalysator, Motorblock o.dgl. ausgehende Wärmebelastung.

Auspufftöpfe und insbesondere Katalysatoren werden während des Betriebs eines Kraftfahrzeuges sehr heiß. Durch Strahlung und durch Konvektion wird diese Hitze an die Umgebung abgegeben. Während der Fahrt ist die durch Konvektion auf die oberhalb des heißen Bauteils gelegenen Fahrzeugteile übertragene Wärme vernachlässigbar, da aufsteigende, erhitze Luft vom Fahrtwind umgelenkt wird. Bei stehendem oder sehr langsam sich bewegendem Fahrzeug steigt die Wärmebelastung der im Bereich der heißen Bauteile gelegenen Fahrzeugteile insbesondere durch Konvektionswärme sehr stark an.

Es ist bekannt, zur Reduzierung dieser Wärmebelastung Hitzeschilde einzusetzen.

Der vorliegenden Erfindung liegt die Aufgabe zugrunde, ein Hitzeschild der eingangs genannten Art zu schaffen, das leicht sowie stabil ist und das den Zweck, die im Bereich von heißen Bauteilen liegenden Fahrzeugteile vor übermäßiger Wärmebelastung zu schützen, besonders gut erfüllt.

Erfindungsgemäß wird diese Aufgabe dadurch gelöst, daß das Hitzeschild aus einer Silizium enthaltenden Wärmeschutzmasse besteht. Eine solche Masse kann Keramik, Calcium-Silikat, Kieselgur oder ein Gemisch von Kieselgur und Magnesia, Kieselsäure usw. sein.

Silizium enthaltende Werkstoffe der angegebenen Art ermöglichen eine hervorragende Wärmedämmung bei gleichzeitig geringer Wärmespeicherkapazität. Die Werkstoffe sind bis zu einer Temperatur von $900\degree$ C einsatzfähig und formstabil.

Besonders vorteilhaft ist, wenn die angegebenen Wärmedämmstoffe eine poröse, insbesondere mikroporöse Struktur haben. Zweckmäßig sollte der Durchmesser der Poren kleiner sein als die mittlere freie Weglänge von Luftmolekülen, also kleiner als $10^{-3}$cm. Bei porösen Werkstoffen dieser Art ist der Wärmeübergang durch Konvektion erschwert, so daß sie den Zweck des Wärmeschutzes besonders gut erfüllen können.

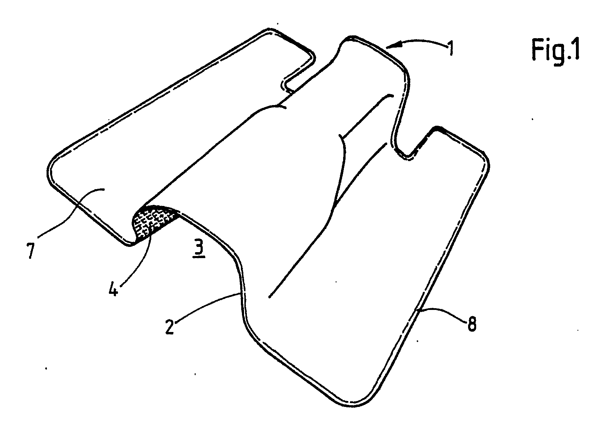

In der Figur ist ein Ausführungsbeispiel für ein Hitzeschild der erfindungsgemäßen Art dargestellt.

Der Hitzeschild 1 weist einen nach oben gewölbten Abschnitt 2 auf, wodurch ein nach unten offener, tunnelartig geformter Raum 3 entsteht. In diesem Raum 3 befindet sich das während des Betriebs des Kraftfahrzeuges heiße Bauteil. Der oberhalb des Hitzeschildes 1 befindliche, nicht dargestellte Fahrzeugboden soll vor der von diesem Bauteil abgegebenen Wärme geschützt werden. Natürlich sind auch andere Formen denkbar. Der Hitzeschild sollte jeweils der äußeren Form des abzuschirmenden heißen Bau teils angepaßt sein.

Besteht der Hitzeschild aus den oben erwähnten Werkstoffen, dann kann er den Zweck, die in seinem Bereich liegenden Fahrzeugteile vor der vom heißen Bauteil ausgehenden Wärmebelastung zu schützen, besonders gut erfüllen.

Eine weitere Maßnahme besteht darin, den Hitzeschild 1 auf seiner dem heißen Bauteil zugewandten Seite mit einer glänzenden Schicht zu versehen, vorzugsweise mit einer Aluminiumfolie zu beschichten. Eine derartige Schicht stellt eine Reflektionsschicht für IR-Strahlen dar, so daß die Wärmeschutzeigenschaften des dargestellten Hitzeschildes 1 weiter verbessert sind.

Beim dargestellten Ausführungsbeispiel erstreckt sich die Aluminiumfolie 4 bis zum äußeren Rand 8 des Hitzeschildes 1 und umfaßt diesen Rand 8. Diese Maßnahme sichert zusätzlich den Halt der Aluminiumfolie 4 auf dem Hitzeschild 1.

## Ansprüche

1) Hitzeschild zum Schutz eines Fahrzeugs bzw. Fahrzeugteilbereichs gegen die von heißen Bauteilen, wie Auspufftopf, Katalysator, Motorblock o.dgl. ausgehende Wärmebelastung, dadurch gekennzeichnet, daß es aus einer Silizium enthaltenden Wärmeschutzmasse besteht.

2) Hitzeschild nach Anspruch 1, dadurch gekennzeichnet, daß es aus einem Keramik-Werkstoff besteht.

3) Hitzeschild nach Anspruch1, dadurch gekennzeichnet, daß es Calcium-Silikat enthält.

4) Hitzeschild nach Anspruch1, dadurch gekennzeichnet, daß sein Basismaterial Kieselgur ist.

5) Hitzeschild nach Anspruch 4, dadurch gekennzeichnet, daß es einem Gemisch von Kieselgur und Magnesia besteht.

6) Hitzeschild nach Anspruch 1, dadurch gekennzeichnet, daß sein Basismaterial Kieselsäure ist.

7) Hitzeschild nach Anspruch 6, dadurch gekennzeichnet, daß es bis zu 2/3 Kieselsäure enthält und daß die übrigen Bestandteile aus anderen Silikaten und keramischen Fasern bestehen.

8) Hitzeschild nach einem der vorhergehenden Ansprüche, dadurch gekennzeichnet, daß es eine poröse, insbesondere mikroporöse Struktur hat.

9) Hitzeschild nach Anspruch 8, dadurch gekennzeichnet, daß der Durchmesser der Poren kleiner ist als die mittlere freie Weglänge von Luftmolekülen.

10) Hitzeschild nach einem der vorhergehenden Ansprüche, dadurch gekennzeichnet, daß es einen nach oben gewölbten Abschnitt (2) aufweist, der einen nach unten offenen Raum (3) bildet.

11) Hitzeschild nach Anspruch 10, dadurch gekennzeichnet, daß der Raum (3) tunnelartige Form hat.

12) Hitzeschild nach einem der vorhergehenden Ansprüche, dadurch gekennzeichnet, daß es auf seiner dem heißen Bauteil zugewandten Seite mit einer Aluminiumfolie (4) beschichtet ist.

13) Hitzeschild nach Anspruch 12, dadurch gekennzeichnet, daß die Aluminiumfolie den Rand (8) des Hitzeschildes (1) umgreift.

Fig.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-U-8812026 (CHEMIE-WERK WEINSHEIM GMBH) <br> * das ganze Dokument * | 1 | F02B77/11 <br> B60R13/08 |
| A | | 8, 9, 10, 11, 12, 13 | |
| Y | PATENT ABSTRACTS OF JAPAN <br> vol. 9, no. 324 (C-320)(2047) 19 Dezember 1985, <br> & JP-A-60 155677 (USUI KOKUSAI SANGYO K.K.) 15 August 1985, <br> * das ganze Dokument * | 1 | |
| A | | 2, 3, 4, 5, 7 | |
| A | US-A-4255482 (TAKARA KENZAI SEISAKUSHO K.K.) <br> * Spalte 2, Zeile 25 - Spalte 2, Zeile 60; Figur 1 * | 1-6 | |
| A | DE-A-2907767 (SÜDDEUTSCHE BREMSEN -AG) | | |

**RECHERCHIERTE SACHGEBIETE (Int. Cl.5)**

F02B
B60R

Der vorliegende Recherchenbericht wurde für alle Patentansprüche erstellt

| Recherchenort | Abschlußdatum der Recherche | Prüfer |
|---|---|---|
| DEN HAAG | 29 OKTOBER 1990 | WASSENAAR G. |